# DEMANDE DE BREVET EUROPEEN

(11) **EP 2 202 980 A1**
(43) Date de publication de la demande: **30.06.2010**
(21) Numéro de dépôt: 09179063.4
(22) Date de dépôt: 14.12.2009
(51) Int. Cl.: H04N 7/26

(54) **Procédé de traitement d'image pour imprimante multifonctions**

(30) Priorité: 23.12.2008 FR 0859004
(71) Demandeur: Sagem Communications SAS, 92500 Rueil-Malmaison (FR)
(72) Inventeur: Berger, Jérôme, 92500, Rueil-Malmaison (FR)
(74) Mandataire: Lebkiri, Alexandre

(57) **Abrégé**

La présente invention se rapporte à un procédé de traitement d'une image source pour imprimante multifonctions comportant les étapes de :
- Appliquer une transformée à un ensemble de pixels de l'image source de sorte à générer des coefficients matriciels ;
- Générer une image compressée à partir desdits coefficients matriciels.

Elle se **caractérise en ce que** le procédé comporte en outre les étapes de :
- Générer à partir de coefficients matriciels une image de résolution inférieure à l'image source, ladite étape et l'étape de génération d'une image compressée étant effectuées simultanément ;
- Appliquer un premier traitement sur ladite image compressée ; et
- Appliquer un deuxième traitement sur ladite image de résolution inférieure.

## Description

### DOMAINE TECHNIQUE DE L'INVENTION

La présente invention concerne un procédé de traitement d'une image source pour imprimante multifonctions comportant les étapes de :
- Appliquer une transformée à un ensemble de pixels de l'image source de sorte à générer des coefficients matriciels ;
- Générer une image compressée à partir desdits coefficients matriciels.
L'invention concerne également un dispositif de traitement permettant de mettre en oeuvre ledit procédé.

Elle trouve une application particulière dans le domaine des produits multifonctions, tels que les imprimantes multifonctions, qui intègrent des dispositifs d'acquisition (scanner), de compression, de stockage et d'impression d'images.

### ARRIERE-PLAN TECHNOLOGIQUE DE L'INVENTION

Dans le domaine des produits multifonctions, un état de la technique connu de procédé de traitement d'une image source pour imprimante multifonctions comportant les étapes d'appliquer une transformée à un ensemble de pixels de l'image source de sorte à générer des coefficients matriciels, et de générer une image compressée à partir desdits coefficients matriciels, utilise une fonction de compression pour :
- réduire la mémoire nécessaire pour, par exemple, différer une impression (c'est-à-dire introduire un délai entre le moment où le dispositif d'acquisition acquiert l'image et le moment où le dispositif d'impression imprime l'image),
- ou bien encore pour déporter une impression (c'est-à-dire que les dispositifs d'acquisition et d'impression sont situés dans des endroits différents et que l'image est transmise de l'un à l'autre par un réseau par exemple).

Par ailleurs, un tel procédé utilise également une fonction d'analyse d'image de résolution inférieure à l'image source afin de sélectionner des paramètres de traitement, tels que des paramètres de contraste ou de luminosité, avant d'effectuer lesdits traitements sur l'image source.
Une méthode connue de l'homme du métier pour générer une image de résolution inférieure consiste à appliquer un filtre passe-bas (tel que par exemple un filtre moyenneur ou un filtre gaussien) sur l'image source, puis à procéder à un sous-échantillonnage.
Une méthode de compression connue de l'homme du métier, telle que la compression JPEG, consiste à appliquer plusieurs filtres sur l'image source, dont certains sont des filtres passe-bas, avant d'effectuer des traitements appropriés sur des coefficients obtenus.

Un inconvénient de cet état de la technique est que les fonctions de compression et de traitement d'analyse d'image de résolution inférieure sont exécutées indépendamment l'une de l'autre et utilisent donc beaucoup de ressources et de temps de calcul.

### DESCRIPTION GENERALE DE L'INVENTION

La présente invention a pour but un procédé de traitement d'une image source pour imprimante multifonctions comportant les étapes de :
- Appliquer une transformée à un ensemble de pixels de l'image source de sorte à générer des coefficients matriciels ;
- Générer une image compressée à partir desdits coefficients matriciels,
qui permet de réduire les ressources utilisées ainsi que le temps de calcul utilisés pour ces fonctions de compression et d'analyse d'image de résolution inférieure.

Selon un premier objet de l'invention, ce but est atteint par un procédé de traitement d'une image source pour imprimante multifonctions comportant les étapes de :
- Appliquer une transformée à un ensemble de pixels de l'image source de sorte à générer des coefficients matriciels ;
- Générer une image compressée à partir desdits coefficients matriciels, caractérisé en ce qu'il comporte en outre les étapes de :
   - Générer à partir de coefficients matriciels une image de résolution inférieure à l'image source, ladite étape et l'étape de génération d'une image compressée étant effectuées simultanément ;
   - Appliquer un premier traitement sur ladite image compressée ; et
   - Appliquer un deuxième traitement sur ladite image de résolution inférieure.

Comme on va le voir en détail par la suite, le fait de générer une image compressée et une image de résolution inférieure à l'image source à partir d'un même résultat (coefficients d'une transformée), permet réduire le temps de traitement puisque les deux images peuvent être générées en parallèle.

Selon des modes de réalisation non limitatifs, le procédé peut comporter en outre une ou plusieurs caractéristiques supplémentaires parmi les suivantes :
- La transformée est une transformée DCT. La transformée DCT (« Discrete Cosine Transform ») permet de représenter une image couleur en une carte de fréquences et en amplitudes plutôt qu'en pixels et en couleurs et ce sans pertes d'informations.
- La transformée est une transformée en ondelettes. La transformée en ondelettes permet de décomposer une image en une pluralité d'images de résolution inférieure et ce sans pertes d'informations.
- L'ensemble de pixels comporte tous les pixels de l'image source. Ainsi on applique la transformée à toute l'image source. Cela permet d'obtenir un meilleur taux de compression.
- L'ensemble de pixels est un bloc d'image. Ainsi, on applique la transformée à un bloc d'image. Cela permet d'augmenter la rapidité de traitement de l'image source, et d'utiliser un composant dédié qui comprend peu de mémoire. En conséquence, les coûts sont réduits.
- Un bloc d'image a une taille puissance de 2. Cela permet d'obtenir un bon compromis entre la taille de la mémoire disponible pour les traitements et le taux de compression voulu. En outre, cela permet de simplifier le calcul d'une transformée.
- L'image de résolution inférieure est générée à partir de coefficients matriciels basse fréquence. Cela permet d'être sûr que l'image générée est bien de résolution plus basse que l'image source.
- L'image compressée est générée à partir de tous les coefficients matriciels issus de la transformée. Cela évite les pertes d'informations et permet de reconstituer par la suite l'image source par décompression et ce sans altération.

Selon un deuxième objet de l'invention, elle concerne un dispositif de traitement d'une image source pour imprimante multifonctions, caractérisé en ce qu'il est apte à mettre en oeuvre le procédé selon l'une au moins des caractéristiques précédentes.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention.
- La figure 1 représente un organigramme selon un mode de réalisation non limitatif du procédé de traitement d'image selon l'invention ;
- La figure 2 représente de manière simplifiée une décomposition d'une image en blocs, selon une étape du procédé représenté à la figure 1 ;
- La figure 3, montre un schéma simplifié d'un exemple non limitatif d'une première matrice obtenue par l'application d'une première transformée sur une image, selon une étape du procédé représenté à la figure 1 ;
- La figure 4 montre un schéma simplifié d'un exemple non limitatif d'une deuxième matrice obtenue par l'application d'une deuxième transformée sur une image, selon une étape du procédé représenté à la figure 1 ; et
- La figure 5 montre un schéma simplifié d'un dispositif de traitement d'image permettant de mettre en oeuvre le procédé représenté à la figure 1.

### DESCRIPTION DES FORMES DE REALISATION PREFEREES DE L'INVENTION

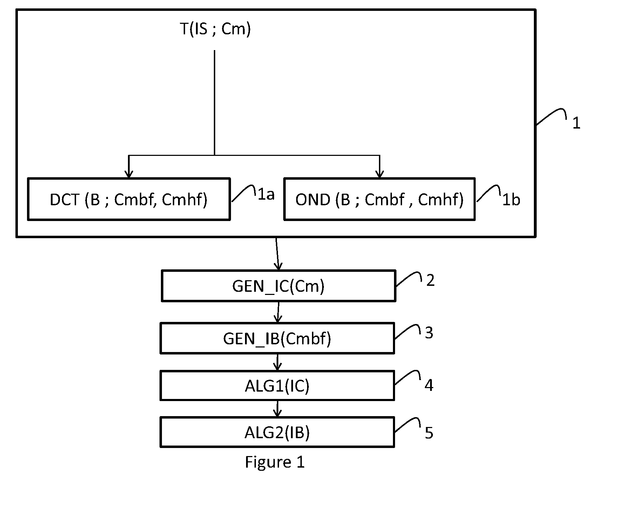

Le procédé de traitement d'une image source pour imprimante multifonctions selon l'invention, est décrit dans un mode de réalisation non limitatif à la figure 1.

Le procédé de traitement comporte les étapes suivantes telles qu'illustrées à la figure 1 :
- Appliquer une transformée T à un ensemble de pixels de l'image source IS de sorte à générer des coefficients matriciels Cm (étape T(IS ; Cm) illustrée sur la figure 1) ;
- Générer une image compressée IC à partir desdits coefficients matriciels (étape GEN_IC(Cm) illustrée sur la figure 1) ;
- Générer à partir de coefficients matriciels Cm une image de résolution inférieure IB à l'image source IS, ladite étape et l'étape de génération d'une image compressée (IC) étant effectuées simultanément (étape GEN_IB(Cmbf) illustrée sur la figure 1) ;
- Appliquer un premier traitement ALG1 sur ladite image compressée IC (étape ALG1 (IC) illustrée sur la figure 1) ; et
- Appliquer un deuxième traitement ALG2 sur ladite image de résolution inférieure IB (étape ALG2(IC) illustrée sur la figure 1).

Les étapes du procédé sont décrites en détail ci-après.

**Dans une première étape 1**), on applique une transformée T à un ensemble de pixels de l'image source IS de sorte à générer des coefficients matriciels Cm.

On notera que l'image source IS est acquise selon des méthodes d'acquisition connues de l'homme du métier dans une étape en amont du procédé de traitement décrit. Bien entendu, cette étape pourrait être comprise dans le procédé de traitement décrit.
Dans un exemple non limitatif, on prend une image source IS de 2000*3000 pixels pour la suite de la description. On rappelle que dans des exemples non limitatifs, à une image source IS acquise sont associées des couleurs RGB, ou encore une composante de couleur luminance Y et deux composantes de couleur de chrominance UV selon l'espace colorimétrique dans lequel on travaille.

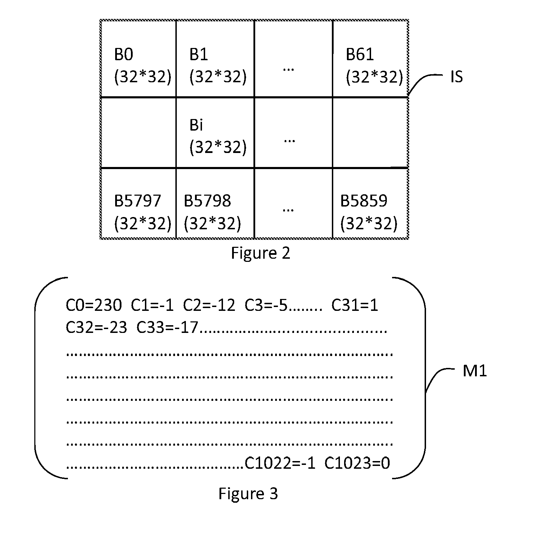

Dans un premier mode de réalisation non limitatif, la transformée T est une transformée DCT connue sous le nom anglais de « Discrete CosineTransform ».
Selon ce premier mode de réalisation, dans une première variante de réalisation non limitative, l'ensemble de pixels est un bloc d'image B (que l'on appelle également bloc de pixels B). Ainsi, cela revient à ce que l'image source IS soit découpée en blocs B tel qu'illustré sur la figure 2 de façon schématique.
On applique ainsi la transformée DCT sur un bloc d'image de l'image source IS.
Dans un mode de réalisation non limitatif, les blocs d'image B ont une taille puissance de 2. Dans des exemples non limitatifs, les blocs d'image B sont des blocs de taille 32*32 pixels ou de 32*16 pixels. Ainsi, dans l'exemple d'une image de 2000*3000 pixels, on a 5860 blocs B.
Le fait de prendre des blocs d'image B de taille puissance de 2, permet d'obtenir un bon compromis entre la mémoire disponible pour les traitements et le taux de compression voulu.
On notera que dans le cas où la taille des blocs d'image B ne permet pas d'obtenir un nombre de blocs entier pour une image source IS, dans un mode de réalisation non limitatif, on peut répéter la dernière ligne et/ou la dernière colonne d'une image source afin de compléter un bloc B non entier.
La transformée DCT est ainsi appliquée à chaque bloc d'image B et ce pour chaque composante de luminance et de chrominance YUV.
Le résultat pour chaque composante YUV est une première matrice fréquentielle M1, pour un bloc B, composée de coefficients matriciels Cm (m=0 à 1023) d'amplitude appliqués à des composantes fréquentielles, tels qu'illustré sur la figure 3.
La transformée DCT permet de séparer les hautes fréquences et de basses fréquences.
Un coefficient matriciel Cm indique dans quelle proportion chaque fréquence F est présente dans le bloc B considéré, ce qui permet de mesurer la quantité de détails dans le bloc B. Ainsi plus un coefficient matriciel Cm est élevé, plus la fréquence F est petite, tandis que plus un coefficient matriciel Cm est bas, plus la fréquence F est grande. Ainsi, dans l'exemple non limitatif de la figure 3, la fréquence basse F est représentée par un unique coefficient matriciel, ici le coefficient matriciel C0 de valeur 230 que l'on appelle coefficient basse fréquence (en haut à gauche de la matrice M1), et les fréquences hautes F par tous les autres coefficients C1 à C1023 que l'on appelle coefficients haute fréquence.
On décrit ainsi chaque bloc B en une carte de fréquences et en amplitudes plutôt qu'en pixels et couleurs et ce sans pertes d'informations.

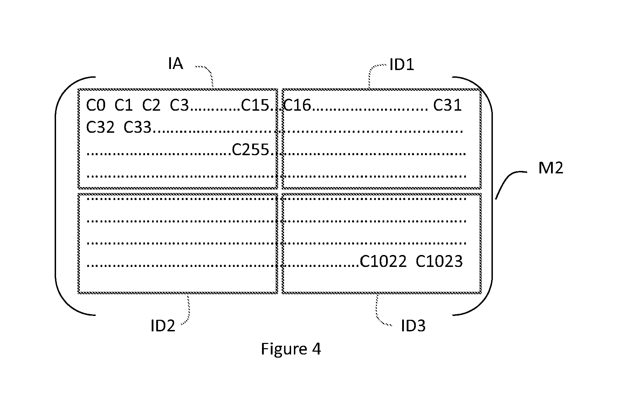

Dans un deuxième mode de réalisation non limitatif, la transformée T est une transformée en ondelettes ONDT. Selon cette méthode, en décompose une image source en une pluralité de sous-bandes, c'est-à-dire d'images de résolution inférieure.
Selon ce deuxième mode de réalisation, dans une première variante de réalisation non limitative, l'ensemble de pixels est un bloc d'image B (que l'on appelle également bloc de pixels B). Ainsi, cela revient à ce que l'image source IS soit découpée en blocs B tel qu'illustré sur la figure 2 de façon schématique.
On applique ainsi la transformée en ondelettes ONDT sur un bloc d'image de l'image source IS.
Dans un mode de réalisation non limitatif, les blocs d'image B ont une taille puissance de 2. Dans des exemples non limitatifs, les blocs d'image B sont des blocs de 32*32 pixels ou de 32*16 pixels.
Comme décrit précédemment, le fait de prendre des blocs d'image B de taille puissance 2 permet de simplifier le calcul de la transformée en ondelettes ONDT. En effet cette dernière nécessite des données en entrée (image ou bloc d'image) multiples de deux. Ainsi, les blocs de puissance 2 permettent d'obtenir à chaque répétition de la transformée en ondelettes des images d'entrée et de résultat multiples de deux.
Par ailleurs, cela est un bon compromis entre la mémoire disponible pour les traitements et le taux de compression voulu.
La transformée en ondelettes ONDT est ainsi appliquée à chaque bloc d'image B et ce pour chaque composante de luminance et de chrominance YUV.
La transformée en ondelettes ONDT étant connue de l'homme du métier, elle n'est pas décrite en détail ici. On se rapportera aux différents types d'ondelettes connus de l'homme du métier.
On notera simplement que l'image source IS étant, dans l'exemple pris, à deux dimensions, l'ondelette utilisée pour la transformée sera dans un exemple non limitatif une ondelette 2D, tel que dans un exemple non limitatif l'ondelette de Haar.
Le résultat pour chaque composante YUV est une deuxième matrice fréquentielle M2, pour chaque bloc B, composée de coefficients matriciels Cm (m=0 à 1023) tels qu'illustré sur la figure 4 qui définissent :
- d'une part une image d'approximation IA qui a une résolution divisée par deux par rapport à une image source IS, et qui est composée de coefficients matriciels basse fréquence Cmbf ; et
- d'autre part, trois images de détails ID1, ID2, ID3 qui sont composées des coefficients matriciels hautes fréquences Cmhf.
Ainsi, dans l'exemple non limitatif de la figure 4, l'image d'approximation IA est représentée par les coefficients matriciels basse fréquence, soit les coefficients matriciels C0 à C15, C32, C33 ... et C255 dans l'exemple pris, et les images de détails ID1, ID2 et ID3 par les autres coefficients matriciels haute fréquence que l'on appelle également coefficients correcteurs.
On notera que cette transformation en ondelettes est répétée autant de fois que nécessaire pour obtenir le nombre voulu de sous-bandes et est appliquée à chaque fois sur l'image d'approximation IA obtenue la fois précédente. Ainsi, à partir du deuxième niveau d'application de la transformée, l'image source IS utilisée est l'image d'approximation IA obtenue au niveau précédent.
Dans une deuxième variante de réalisation non limitative de ce deuxième mode de réalisation, l'ensemble de pixels comporte tous les pixels de l'image source IS. La transformée en ondelettes ONDT est ainsi appliquée sur toute l'image source IS. Cela permet d'obtenir un meilleur taux de compression. En effet, lors de l'application de la transformée ONDT, des données redondantes sont enlevées. Le fait de traiter l'image source IS en entier permet ainsi d'enlever plus de données qui se répètent que dans le cas d'un traitement par bloc B.
Le résultat est également une deuxième matrice fréquentielle M2 composée de coefficients matriciels Cm qui composent :
- d'une part une image d'approximation IA qui a une résolution divisée par deux par rapport à une image source IS, et qui est composée de coefficients matriciels basse fréquence Cmbf ; et
- d'autre part, trois images de détails ID1, ID2, ID3 qui sont composées des coefficients matriciels hautes fréquences Cmhf.
On notera que pour simplifier le calcul de la transformée en ondelettes ONDT, dans une variante de réalisation non limitative, on prend une image source IS multiple de deux. A cet effet, dans le cas où la taille de l'image source n'est pas un multiple de deux, dans un mode de réalisation non limitatif, on ne prend pas en compte certaines des lignes et/ou colonnes de l'image source IS dans la transformée de manière à obtenir une taille multiple de deux.

**Dans une deuxième étape 2**), on génère une image compressée IC à partir desdits coefficients matriciels Cm.

Dans un mode de réalisation non limitatif, une image compressée IC est générée à partir de tous les coefficients matriciels Cm issus de la transformée T et selon une méthode de compression déterminée.

En ce qui concerne le premier mode de réalisation de la transformée DCT décrite dans la première étape, dans un exemple non limitatif, pour une méthode de compression telle que du JPEG (« Joint Photographic Experts Group »), à partir de chaque matrice fréquentielle M1 obtenue de chaque bloc B, on effectue des étapes de :
- Sérialisation de la première matrice fréquentielle M1, selon laquelle on balaye la matrice M1 en zigzag pour obtenir un vecteur de coefficients Vcm ;
- Codage entropique également appelé codage à longueur variable (dans des exemples non limitatifs par la méthode de Huffmann ou de code arithmétique), selon lequel on fait une analyse statistique de l'occurrence probable des coefficients à partir du vecteur de coefficient Vcm obtenu précédemment, et on applique des codes courts aux coefficients statistiquement les plus fréquents.
La compression JPEG étant connue de l'homme du métier, elle n'est pas décrite plus en détail ici.
Dans une variante de réalisation non limitative, on peut également appliquer préalablement à la sérialisation, une étape de quantification, selon laquelle on divise la première matrice fréquentielle M1 par une matrice de quantification MQ pour atténuer les hautes fréquences (faible amplitude), c'est-à-dire celles auxquelles l'oeil humain est très peu sensible. On obtient ainsi une matrice quantifiée MRQ sur laquelle on va appliquer la sérialisation. On notera cependant que cette étape de quantification dégrade l'image source car elle introduit des pertes d'informations.
Le résultat de toutes ces étapes permet d'obtenir une image compressée IC.

En ce qui concerne le deuxième mode de réalisation de la transformée en ondelettes ONDT décrite dans la première étape, dans un exemple de réalisation non limitatif, on applique un codage entropique tel que décrite précédemment. On peut également appliquer la variante non limitative décrite intégrant une quantification.

Bien entendu, d'autres méthodes de compression peuvent être utilisées, telle que dans un exemple non limitatif des méthodes de compression fractale, et on se rapportera à ces autres méthodes pour les différentes étapes appliquées à la première matrice fréquentielle M1 pour obtenir une image compressée IC.

**Dans une troisième étape 3**), on génère à partir de coefficients matriciels Cm une image de résolution inférieure IB à l'image source IS, ladite étape et l'étape de génération d'une image compressée IC étant effectuées simultanément.

Dans un mode de réalisation non limitatif, l'image de résolution inférieure IB est générée à partir de coefficients matriciels basse fréquence Cmbf.

En ce qui concerne le premier mode de réalisation décrit dans la première étape (transformée DCT), pour chaque bloc B de pixels, on prend la moyenne de tous les pixels dudit bloc B et on obtient un coefficient moyen Cmm pour chaque bloc B. Ce coefficient Cmm correspond au coefficient basse fréquence Cmbf (en haut à gauche de la première matrice M1) obtenu précédemment lors de l'application de la transformée DCT.
On obtient ainsi une image de résolution inférieure IB composée d'un ensemble de coefficients moyens Cmm.

En ce qui concerne le deuxième mode de réalisation décrit dans la première étape (transformée en ondelettes ONDT) :
Dans la première variante de réalisation décrite dans la première étape (application de la transformée en ondelettes ONDT à chaque bloc B d'images), on sauvegarde le coefficient basse fréquence de chaque bloc B (en haut à gauche du bloc), l'image de résolution inférieure IB étant composée de l'ensemble des coefficients sauvegardés de tous les blocs B.
Dans la deuxième variante de réalisation décrite dans la première étape (application de la transformée en ondelettes ONDT sur toute l'image source IS), une image de résolution inférieure IB peut être extraite à chaque niveau intermédiaire. En effet, comme vu précédemment, une image de résolution inférieure IB (qui est dans ce cas une image d'approximation IA) est obtenue lors de l'application de la transformée en ondelettes ONDT elle-même.

On notera que cette étape est exécutée en parallèle de la deuxième étape, puisque la génération d'une image compressée IC et la génération d'une image de résolution inférieure sont indépendantes l'une de l'autre.

Ainsi, à partir d'une transformée qui est en général utilisée uniquement pour une fonction de compression, on en déduit une image de résolution inférieure que l'on utilise pour un traitement ultérieur.

**Dans une quatrième étape 4**), on applique un premier traitement ALG1 sur ladite image compressée IC.

Dans un premier exemple non limitatif, dans l'exemple d'application non limitatif de produits multifonctions, le premier traitement ALG1 est un stockage de l'image compressée IC en mémoire. Cela permet de différer une impression par exemple. Dans un deuxième exemple non limitatif, le premier traitement ALG1 est une décompression de l'image compressée IC.
Bien entendu, ces exemples sont non limitatifs, et d'autres premiers traitements ALG1 peuvent être appliqués en fonction de l'application utilisée.

**Dans une cinquième étape 5**), on applique un deuxième traitement ALG2 sur ladite image de résolution inférieure IB.

Dans un exemple non limitatif, dans l'exemple d'application non limitatif de produits multifonctions, le deuxième traitement ALG2 est une analyse de l'image résolution inférieure IB permettant de sélectionner des paramètres de traitement, tels que des paramètres de contraste ou de luminosité, avant d'effectuer lesdits traitements sur l'image source. Cela permet de faire une analyse de ces paramètres plus rapidement que si on analysait l'image source directement.
Bien entendu, cet exemple est non limitatif, et d'autres deuxièmes traitements ALG2 peuvent être appliqués en fonction de l'application utilisée.

On notera que cette étape peut être exécutée en parallèle de la quatrième étape, les deux traitements ALG1 et ALG2 étant indépendants l'un de l'autre.

Ainsi, le procédé de traitement d'images permet non seulement de générer une image compressée, mais également de générer une image de résolution inférieure en minimisant les temps de calcul car ces deux traitements sont faits à partir du résultat d'un seul traitement qui est l'application d'une transformée.

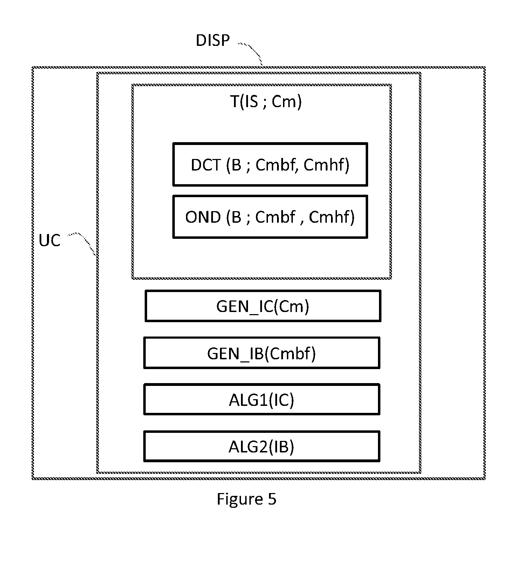

Le procédé de traitement décrit est mis en oeuvre par un dispositif de traitement DISP d'une image source IS associée tel qu'illustré à la figure 5.

Ce dispositif DISP est intégré dans un produit multifonctions dans le cadre de l'application décrite.

Ainsi, le dispositif DISP comporte notamment une unité de contrôle UC pour :
- Appliquer une transformée T à un ensemble de pixels de l'image source IS de sorte à générer des coefficients matriciels Cm ;
- Générer une image compressée IC à partir desdits coefficients matriciels ;
- Générer à partir de coefficients matriciels Cm une image de résolution inférieure IB à l'image source IS ;
- Appliquer un premier traitement ALG1 sur ladite image compressée IC ; et
- Appliquer un deuxième traitement ALG2 sur ladite image de résolution inférieure IB.

Bien entendu la description de l'invention n'est pas limitée à l'application, aux modes de réalisation et aux exemples décrits ci-dessus.
Ainsi, l'invention s'applique à des applications telles que des imprimantes multifonctions, mais encore à toute autre application nécessitant l'utilisation d'une image compressée et d'une image de résolution inférieure à une image source.
Par ailleurs, dans un autre mode de réalisation non limitatif, on peut appliquer la transformée en ondelettes ONDT directement sur chaque couleur RGB au lieu des composantes de luminance et de chrominance YUV.
De plus, le procédé s'applique à des images sources en couleur telles que vu précédemment, ou également à des images sources en noir et blanc (des niveaux de gris compris entre 0 et 255 étant associés à chaque pixel). Dans ce dernier cas, on n'aura qu'une unique première matrice fréquentielle M1 (pour chaque bloc), et qu'une unique deuxième matrice fréquentielle M2 (pour chaque bloc) au lieu de trois premières matrices M1 et trois deuxièmes matrices M2.
Enfin, dans un autre mode de réalisation non limitatif, le procédé pourrait également s'appliquer à des images en 3D.

Ainsi, l'invention décrite présente notamment les avantages suivants :
- Elle permet de réduire les ressources nécessaires au traitement de la compression et de la génération d'image de résolution inférieure et de réduire la puissance de calcul nécessaire ;
- Elle est simple à mettre en oeuvre ;
- Elle réduit le nombre de traitements à faire pour obtenir deux résultats : l'image compressée et l'image de résolution inférieure ;
- Elle permet de générer simultanément l'image compressée et l'image de résolution inférieure à partir de résultat d'une transformée ; et
- Elle permet de diminuer le nombre de traitements effectués sur une image source pour obtenir une image de résolution inférieure. En effet, l'application d'une transformée DCT permet d'obtenir des coefficients basse fréquence ce qui correspond à un filtrage passe-bas, et le fait de choisir un seul coefficient basse fréquence dans un bloc correspond à faire un sous-échantillonnage. De la même manière, l'application d'une transformée en ondelettes permet d'obtenir une image de résolution divisée par deux et composée de coefficients basse fréquence ce qui correspond à un filtre passe-bas plus un sous-échantillonnage. On a donc remplacé deux traitements classiques (filtre passe-bas et sous-échantillonnage) pour obtenir une image de résolution inférieure par un seul traitement (une transformée).

## Revendications

1. Procédé de traitement d'une image source (IS) pour imprimante multifonctions comportant les étapes de :
- Appliquer une transformée (T) à un ensemble de pixels de l'image source (IS) de sorte à générer des coefficients matriciels (Cm) ;
- Générer une image compressée (IC) à partir desdits coefficients matriciels (Cm), **caractérisé en ce qu'**il comporte en outre les étapes de :
- Générer à partir de coefficients matriciels (Cm) une image de résolution inférieure (IB) à l'image source (IS), ladite étape et l'étape de génération d'une image compressée (IC) étant effectuées simultanément ;
- Appliquer un premier traitement (ALG1) sur ladite image compressée (IC) ; et
- Appliquer un deuxième traitement (ALG2) sur ladite image de résolution inférieure (IB).

2. Procédé de traitement selon la revendication 1, **caractérisé en ce que** la transformée (T) est une transformée DCT.

3. Procédé de traitement selon la revendication 1, **caractérisé en ce** la transformée (T) est une transformée en ondelettes (ONDT).

4. Procédé de traitement selon la revendication précédente, **caractérisé en ce que** l'ensemble de pixels comporte tous les pixels de l'image source (IS).

5. Procédé de traitement selon l'une au moins des revendications précédentes 1 à 3, **caractérisé en ce que** l'ensemble de pixels est un bloc d'image (B).

6. Procédé de traitement selon la revendication précédente, **caractérisé en ce qu'**un bloc d'image (B) a une taille puissance de 2.

7. Procédé de traitement selon l'une au moins des revendications précédentes, **caractérisé en ce que** l'image de résolution inférieure (IB) est générée à partir de coefficients matriciels basse fréquence (Cmbf).

8. Procédé de traitement selon l'une au moins des revendications précédentes, **caractérisé en ce que** l'image compressée (IC) est générée à partir de tous les coefficients matriciels (Cm) issus de la transformée (T).

9. Dispositif de traitement (DISP) d'une image source (IS) pour imprimante multifonctions, **caractérisé en ce qu'**il est apte à mettre en oeuvre le procédé selon l'une au moins des revendications précédentes.
